(19) Europäisches Patentamt
European Patent Office
Office européen des brevets

(11) EP 2 741 401 A1

(12) **EUROPEAN PATENT APPLICATION**
published in accordance with Art. 153(4) EPC

(43) Date of publication:
**11.06.2014 Bulletin 2014/24**

(51) Int Cl.:
*H02K 1/27* *(2006.01)*  *H02K 21/16* *(2006.01)*

(21) Application number: **11870679.5**

(22) Date of filing: **29.08.2011**

(86) International application number:
**PCT/CN2011/079064**

(87) International publication number:
**WO 2013/020313 (14.02.2013 Gazette 2013/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2011 CN 201110224882**

(71) Applicants:
- **Gree Electric Appliances, Inc. of Zhuhai**
  **Zhuhai, Guangdong 519070 (CN)**
- **Gree Green Refrigeration Technology Center Co., Ltd**
  **Zhuhai, Guangdong 519070 (CN)**

(72) Inventors:
- **HUANG, Hui**
  **Zhuhai**
  **Guangdong 519070 (CN)**
- **HU, Yusheng**
  **Zhuhai**
  **Guangdong 519070 (CN)**

- **CHEN, Dongsuo**
  **Zhuhai**
  **Guangdong 519070 (CN)**
- **CHEN, Huajie**
  **Zhuhai**
  **Guangdong 519070 (CN)**
- **XIAO, Yong**
  **Zhuhai**
  **Guangdong 519070 (CN)**
- **ZENG, Xueying**
  **Zhuhai**
  **Guangdong 519070 (CN)**
- **ZHANG, Wenming**
  **Zhuhai**
  **Guangdong 519070 (CN)**

(74) Representative: **Mintz Levin Cohn Ferris Glovsky and Popeo LLP**
**Alder Castle**
**10 Noble Street**
**London EC2V 7JX (GB)**

(54) **MOTOR ROTOR AND MOTOR HAVING SAME**

(57)     Disclosed are a motor rotor and a motor having same, wherein, the motor rotor comprises an iron core (10) and permanent magnets (20) provided within the iron core (10), sets of mounting grooves (30) are provided in the peripheral direction of the iron core, with each set of mounting grooves comprising more than two mounting grooves (30) arranged intermittently in the radial direction of the iron core (10). The permanent magnets are correspondingly embedded into the individual mounting grooves (30). The thickness of the permanent magnet (20) at the centre of the cross section thereof and perpendicular to the rotor axis is greater than the thickness at both ends thereof. The rotor optimizes the shape of the permanent magnets (20) and improves the efficiency of the motor.

Fig. 1

**Description**

TECHNICAL FIELD

The present disclosure relates to the field of electric motor, and more specially, to a motor rotor and a motor having same.

BACKGROUND OF THE INVENTION

An Interior Permanent Magnet (IPM) Synchronous Motor is a motor, in which a layer of permanent magnets are provided inside the rotor, and which mainly uses permanent magnetic torque, assisted with reluctance torque.

A formula for the combination of permanent magnetic torque and the reluctance torque is as follows: $T=mp(L_q-L_d)i_di_q +mp\Psi_{PM}i_q$.

Wherein, $T$ is the output torque of the motor, and the performance of the motor can be improved by increasing the value of $T$; the first term, after $T$ in the equation, is the reluctance torque; the second term is the permanent magnetic torque; $\Psi_{PM}$ is the maximum of the stator and rotor coupling flux generated by the permanent magnet of the motor; m is the number of the phases of the stator winding; p is the number of pole-pairs of the motor; $L_d$ and $L_q$ are respectively the d-axis inductance and the q-axis inductance, wherein d-axis refers to the axis that coincides with the main magnetic pole axis; q-axis refers to the axis that is perpendicular to the main magnetic pole axis, wherein "perpendicular to" involves the electric angle; $i_d$ and $i_q$ respectively represent the armature current component along the d-axis and the armature current component along the q-axis. As can be seen from the combination formula above, the output torque $T$ of the motor can be increased through increasing the second term, namely the permanent magnetic torque, or through increasing the inductance difference of the d-axis inductance and the q-axis inductance.

In the prior art, the performance of the motor is improved mainly by improving the performance of the permanent magnet, i.e. the value of the composite torque is increased by increasing the permanent magnetic torque, so as to improve the efficiency of the motor. A common method is to embed rare earth permanent magnets in the motor. As rare earth belongs to non-renewable resources and is expensive, the wider application of this kind of motor is limited. If other permanent magnets rather than rare earth permanent magnets are used as the source of the permanent magnetic torque, the motor will have the problem of irreversible demagnetization of the permanent magnets.

Moreover, being limited by the volume of the rotor, and taking account of the utilization of the reluctance torque as well, the space occupancy of the permanent magnets for each pole of the rotor has a limiting value, which limits the improvement of the efficiency of the motor as well.

SUMMARY OF THE INVENTION

The present disclosure aims at providing a motor rotor and a motor having same, which can improve the space occupancy of the permanent magnets, thereby improving the performance of the motor rotor through optimizing the shape of the permanent magnets.

In one aspect, the present disclosure provides a motor rotor comprising an iron core and a plurality of sets of permanent magnets provided inside the iron core; wherein, a plurality of sets of mounting slots are circumferentially distributed in the iron core; each set of mounting slots comprises two or more layers of mounting slots provided at intervals in radial direction of the iron core; the permanent magnets of each set of permanent magnets are correspondingly embedded into the mounting slots of each set of mounting slots; on a cross section of the permanent magnet, which is perpendicular to the axis of the rotor, thickness of the center part of the permanent magnet is larger than the thickness of each of two ends of the permanent magnet.

Preferably, a formula $\dfrac{2}{5} \leq \dfrac{A}{T} \leq 1$ is satisfied, wherein $T$ is the thickness of the permanent magnet along the symmetric line, and A is the thickness of each end of the permanent magnet.

Preferably, a flux barrier bridge is formed between each end of each layer of mounting slots and the periphery of the rotor, and width of each flux barrier bridge ranges from 0.5 mm to 1.0 mm.

Preferably, on a cross section of the mounting slot, which is perpendicular to the axis of the iron core, the mounting slot comprises an outer arc line segment, whose center point is located in a symmetric line of the rotor.

Preferably, on a cross section of the mounting slot, which is perpendicular to the axis of the iron core, the mounting slot further comprises an inner arc line segment, whose center point is located in the symmetric line of the rotor.

Preferably, on a cross section of the mounting slot, which is perpendicular to the axis of the iron core, the mounting slot comprises a first outer straight line segment at one end and a second outer straight line segment at the other end, which are respectively connected to the outer arc line segment; an angle β is formed by the first outer straight line segment and the second outer straight line segment; and a formula $\dfrac{3\pi}{P} > \beta > \dfrac{4\pi}{3P}$ is satisfied, wherein P is the number of poles of the motor rotor.

Preferably, on a cross section of the mounting slot, which is perpendicular to the axis of the iron core, the mounting slot comprises a first outer straight line segment which is connected to one end of the outer arc line segment, and a first inner straight line segment which is connected to one end of the inner arc line segment and disposed at the same side as the first outer straight line segment; and an angle α is formed by the first outer straight line segment and the first inner straight line segment, wherein the angle α is a sharp angle.

Preferably, on each cross section of each mounting slot, which is perpendicular to the axis of the iron core, each mounting slot has arc line segments; and center points of all arc line segments of each set of mounting slots, while the respective center points of the arc line segments are also distributed in sequence in the same direction.

Preferably, there is a clearance left between each of two ends of each permanent magnet and its corresponding mounting slot.

Preferably, the clearance between each of two ends of the permanent magnet and its corresponding magnet slot is filled with non-magnetism medium.

In another aspect, the present disclosure provides a motor comprising the motor rotor described above.

In the motor rotor and the motor having same of the present disclosure, the shape of the permanent magnet is optimized. On the cross section of the mounting slot, which is perpendicular to the axis of the iron core, the thickness of the center part is larger than the thickness of each of two end of the permanent magnet, so that, more permanent magnets can be arranged in the rotor with a given cross-section area, which increases the space occupancy of the permanent magnets in each pole, thereby increasing the efficiency of the motor.

BRIEF DESCRIPTION OF THE DRAWINGS

The drawings, constituting part of the present application, are provided for further comprehension of the present disclosure. The illustrative embodiments of the present invention and the corresponding description aim at explaining the present disclosure but are not intended to restrict the present disclosure. Regarding the drawings:

Fig. 1 is a structural diagram of the motor rotor according to the present disclosure;
Fig. 2 is a schematic diagram illustrating the shape of the mounting slot according to the motor rotor of the present disclosure;
Fig. 3 is a schematic diagram illustrating the thickness of the permanent magnet according to the motor rotor of the present disclosure;
Fig. 4 is a schematic diagram illustrating the relation of the demagnetizing current to the ratio of A/T according to the motor rotor of the present disclosure, wherein A is the thickness of each end of the permanent magnet, and T is the thickness of the center part of the permanent magnet;
Fig.5 is a schematic diagram illustrating the relation of the volume of a single permanent magnet to the ratio of A/T according to the motor rotor of the present disclosure, wherein A is the thickness of each end of the permanent magnet, and T is the thickness of the center part of the permanent magnet.

DETAILED DESCRIPTION OF THE PREFERRED EMBODIMENTS

The embodiments of the present invention will be described in details with reference to the accompanying drawings.

The motor rotor of the present disclosure comprises an iron core 10 and permanent magnets 20 provided therein. A plurality of sets of mounting slots 30 are circumferentially distributed in the iron core 10. Each set of mounting slots 30 comprises two or more layers of mounting slots 30 provided at intervals in radial direction of the iron core 10. There are a plurality of sets of permanent magnets 20, and the permanent magnets 20 of each set of permanent magnets 20 are correspondingly embedded into the mounting slots 30 of each set of mounting slots 30. On the cross section perpendicular to the axis of the rotor, the thickness of the center part of the permanent magnet 20 is larger than the thickness of each of two ends of the permanent magnet 20.

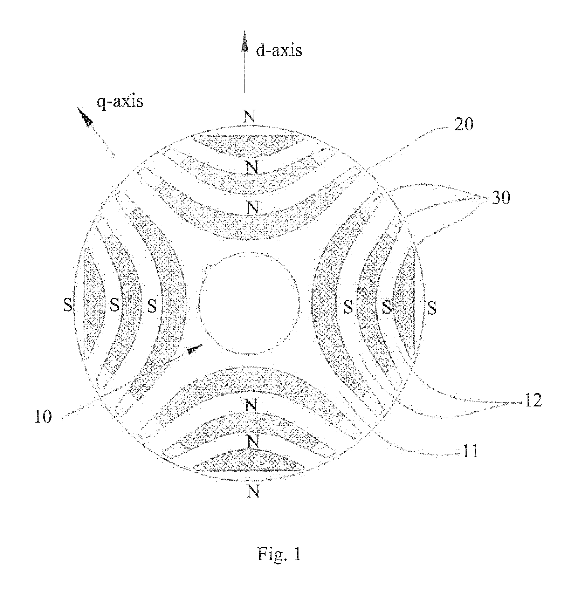

As shown in Fig.1, the motor rotor having four poles, each of which is provided with three layers of permanent magnets, will be described hereafter as one embodiment. The iron core 10 shown in Fig.1 is formed by stacked and pressed silicon steel sheets. Four sets of through slots are circumferentially and evenly distributed around the axis of the rotor. Each set of through slots comprises three layers of mounting slots 30. The permanent magnets 20 are embedded in the mounting slots 30, and the permanent magnets 20 in the same set of through slots face the periphery of the rotor and have the same magnetic polarity. As shown in Fig.1, three layers of permanent magnets along the d-axis are all S-pole magnets, and adjacent two sets of permanent magnets 20 have the opposite magnetic polarity, i.e., four sets of permanent magnets circumferentially distributed are alternating sets of N-pole magnets and S-pole magnets. There is a magnetic flux channel 12 formed by silicon steel sheets with a certain width between each two adjacent layers of permanent magnets of the same set of the permanent magnets 20. There are connecting ribs 11 formed by silicon steel sheets with non-constant width between each two adjacent poles.

There are a plurality of layers of permanent magnets 20 arranged along the d-axis, and the reluctance of the permanent magnet 20 itself is quite large, which is about equal to the magnetic permeability of air, so the d-axis inductance $L_d$ is less. While the q-axis inductance $L_q$ is greater due to the greater magnetic permeability of the iron core 10 itself. Accordingly, the reluctance torque of the motor rotor is increased; thereby increasing the output torque of the motor, i.e., improving the efficiency of the motor.

Additionally, in order to make full use of the reluctance torque, it should be ensured that the magnetic flux channels 12 and the connecting ribs 11 have certain width respectively, thus, when the thickness of the center part of the arc-shaped permanent magnet 20 is larger than the thickness of each of the two ends, each pole of the rotor can be provided with as many permanent magnets 20 as possible, which can increase the space occupancy of the permanent magnets in each pole of the rotor. The increase of the permanent magnets 20 will have a great contribution to the enhancement of the permanent magnetic torque, thereby improving the efficiency of the motor.

As shown in Fig.1, there is a clearance left between each of two ends of each permanent magnet 20 and its corresponding mounting slot 30. The clearance between each of two ends of the permanent magnet 20 and its corresponding magnet slot 30 is filled with air or non-magnetism medium.

Each set of permanent magnets 20 comprises the permanent magnets 20 which have arc-shaped cross sections perpendicular to the axis of the iron core. The surface of each permanent magnet 20 of each set of permanent magnets 20, which is closer to the center of the rotor along the radial direction, is arc-shaped. Two ends of the permanent magnet 20 are thinner and liable to be demagnetized, so the permanent magnet 20 does not completely fill the mounting slot 30, and the clearance is left between each of two ends of each permanent magnet 20 and its corresponding magnet slot 30, so as to prevent the two ends of the permanent magnet 20 from being demagnetized. In this embodiment, the arc-shaped permanent magnet 20 is a little shorter than the corresponding mounting slot 30 so that the clearance is left between each of two ends of each permanent magnet 20 and its corresponding magnet slot 30. The clearance is filled with air or non-magnetism medium.

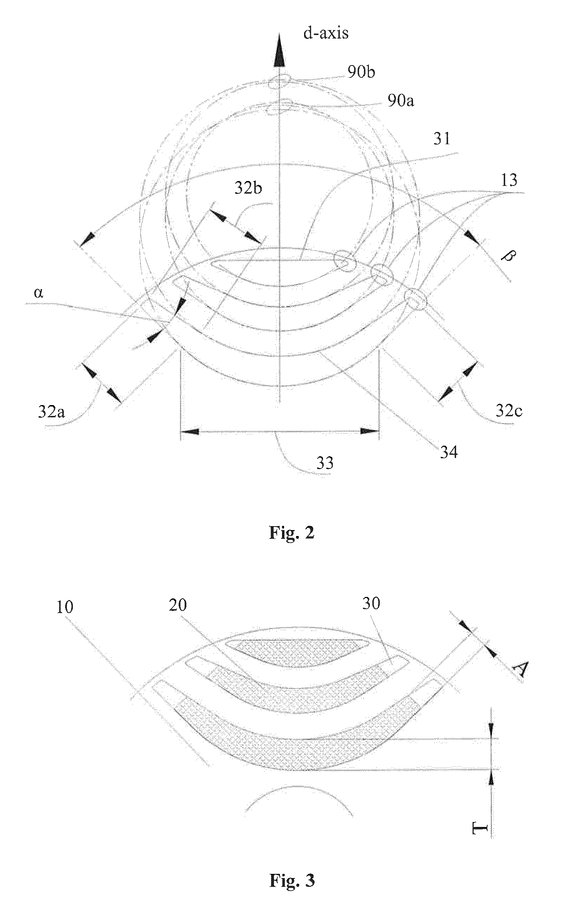

Preferably, as shown in Fig.2, a flux barrier bridge 13 is formed between each end of each layer of mounting slots 30 and the periphery of the rotor, and width of each flux barrier bridge 13 ranges from 0.5 mm to 1.0 mm.

There is some area between the mounting slots 30 and the periphery of the rotor, and the barrier bridges 13 are formed in the area in order to further reduce the flux leakage at the boundary of each permanent magnet 20 and improve the utilization of the permanent magnetic flux. The width of the barrier bridge 13 should be within a certain range. If the barrier bridge 13 is too wide, the magnetism isolating effect will be influenced; if the barrier bridge 13 is too narrow, the mechanical strength of the whole rotor will be affected. The width of each flux barrier bridge 13 ranges from 0.5 mm to 1.0 mm, and the flux barrier bridge can achieve excellent magnetism isolating effect while ensuring the mechanical strength of the rotor.

As shown in Fig.3, the formula $\frac{2}{5} \leq \frac{A}{T} \leq 1$ is satisfied, wherein $T$ is the thickness of the permanent magnet 20 along its symmetric line, and A is the thickness of each end of the permanent magnet.

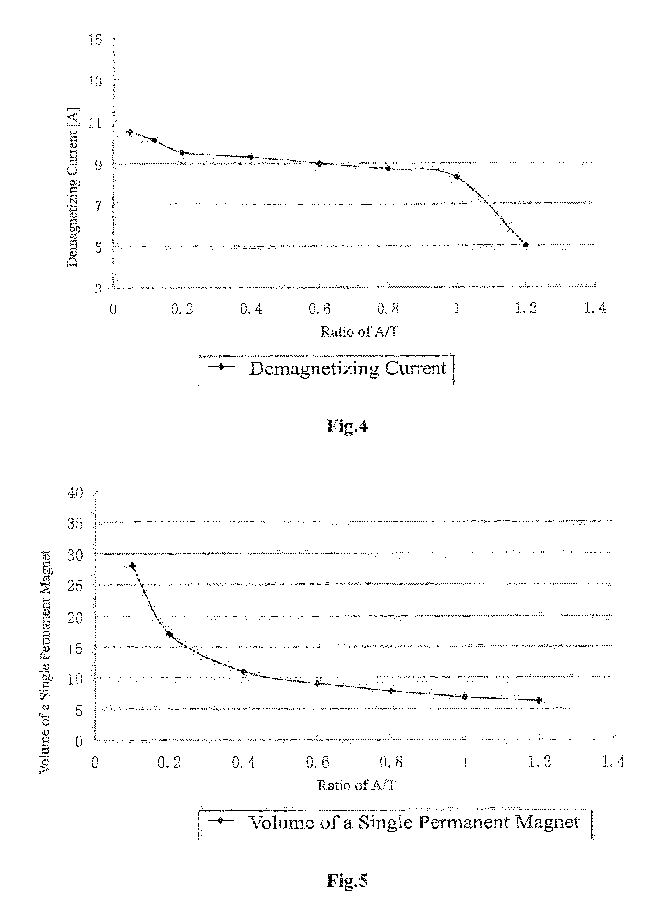

In order to solve the problem of irreversible demagnetization of the permanent magnets 20, especially the demagnetization at the center part of the permanent magnets 20, the ratio of A to T is defined in the range defined in the formula above. Fig.4 is a schematic diagram illustrating the relation of the demagnetizing current to the ratio of A/T, and Fig.5 is a schematic diagram illustrating the relation of the volume of a single permanent magnet to the ratio of A/T. As shown in Fig.4 and Fig.5, when the ratio of A/T is less than $\frac{2}{5}$, the volume of each permanent magnet increases swiftly, but the corresponding demagnetizing current isn't increased obviously. When the ratio of A/T is larger than 1, the arrangement of the permanent magnets in the poles of the motor will be influenced, for each of the permanent magnets has a thinner center part and thicker ends, as a result, the space occupancy of the permanent magnets is reduced. When the ratio of A/T is within the range defined in the formula above, the anti-demagnetization performance of the permanent magnets 20 will be improved, which enables the motor to operate at higher currents and output greater torque. For the convenience of research and calculation, the value of A shown in Fig.4 and Fig.5 is a constant, namely, the thickness of each end of the permanent magnet is preset. The formula involving A/T above is applicable to the relation of the thickness of each of two ends to the thickness of the central part of any one of the permanent magnets 20 in the rotor.

Taking any one of sets of the mounting slots 30 for an example, as shown in Fig.2, on a cross section of the mounting slot, which is perpendicular to the axis of the iron core 10, the mounting slot 30 comprises an outer arc line segment 33, whose center point is located in the symmetric line of the rotor. On a cross section of the mounting slot 30, which is perpendicular to the axis of the iron core 10, the mounting slot 30 further comprises an inner arc line segment 34, whose center point is located in the symmetric line of the rotor. Preferably, on each cross section of each mounting slot 30, which is perpendicular to the axis of the iron core 10, each mounting slot 30 has arc line segments. All the arc line segments of each set of mounting slots are arranged in sequence in a direction from the axis of the iron core 10 to the periphery of the iron core 10, while the respective center points of the arc line segments are also distributed in sequence in the same direction.

As shown in Fig.2, the first set of virtual circles, to which the inner arc line segments of each set of mounting slots 30 belong, gather in the region 90a; the second set of virtual circles, to which the outer arc line segments of each set of mounting slots 30 belong, gather in the region 90b. As can be seen from the figure, the center points of all arc line segments are located along the d-axis. Specifically, center points of arc line segments distributed in the direction from the axis of the rotor to the periphery are located away from the center of the rotor in sequence. Especially, the first set of virtual circles, to which the inner arc line segments of each set of mounting slots 30 belong, gather in the region 90b; and correspondingly, the second set of virtual circles, to which the outer arc line segments of each set of mounting slots 30 belong, gather in the region 90a. The distance between the two regions is determined by the thickness of the permanent magnet 20.

Preferably, the inner side of the outermost layer of permanent magnet, as well as the inner side of the mounting slot 30 , may be arc-shaped, but it is usually designed to be a straight line segment 31 perpendicular to the d-axis, so as to increase the volume of the outermost layer of permanent magnet, thereby increasing the magnetic field intensity on the surface of the rotor.

As shown in Fig.2, on a cross section of the mounting slot 30, which is perpendicular to the axis of the iron core 10, the mounting slot 30 comprises a first outer straight line segment 32a at one end and a second outer straight line segment 32c at the other end, which are respectively connected to the outer arc line segment 33. An angle β is formed by the first outer straight line segment 32a and the second outer straight line segment 32c, and the formula $\dfrac{3\pi}{P} > \beta > \dfrac{4\pi}{3P}$ is satisfied, wherein p is the number of poles of the motor rotor.

Taking the inner layer of the mounting slot near to the center of the rotor for an example, as shown in Fig.2, the first outer straight line segment 32a and the second outer straight line segment 32c are respectively connected to two ends of the outer arc line segment 33 and extend to the positions 0.5 mm to 1.0 mm away from the periphery of the rotor. The angle will certain degrees is formed by the first outer straight line segment 32a and the second outer straight line segment 32c. When the angle β satisfies the formula above, more permanent magnets can be arranged in each pole of the rotor.

As shown in Fig.2, on a cross section of the mounting slot 30, which is perpendicular to the axis of the iron core 10, the mounting slot 30 comprises the first outer straight line segment 32a which is connected to one end of the outer arc line segment 33, and a first inner straight line segment 32b which is connected to one end of the inner arc line segment 34 and disposed at the same side as the first outer straight line segment 32a. An angle α formed by the first outer straight line segment 32a and the first inner straight line segment 32b is a sharp angle.

The angle α, which is formed by the first outer straight line segment 32a and the first inner straight line segment 32b at one end of the mounting slot 30, is a sharp angle, so each of the ends of the mounting slot 30 converges at the extended segment, which makes the width of the central part of the mounting slot 30, which is along the d-axis, is greater than the thickness of each of the two ends. The shape of the permanent magnet 20 is designed to closely fit the mounting slot 30, so the convergence of the ends of the mounting slot can fix the permanent magnet 20 and prevent the permanent magnet 20 from sliding, without the need of additional positioning components or adhesives. This kind of design is also applicable to the inner sides and the outer sides of the slots with other shapes.

The present disclosure further provides a motor, which comprises the motor rotor described above.

The motor of the present disclosure improves the utilization of the reluctance torque and the efficiency of the motor through defining the ratio of the thickness of the permanent magnet to the clearance. The motor of the present disclosure can be applied in compressors of air conditioners, in electric vehicles and in electric fan systems.

As can be seen from the description above, the embodiments of the present invention can achieve the technical effects as follows:

Base on studies on the relation of the thickness of the center part and the thickness of the ends of the permanent magnet, and studies on the design of the permanent magnet and the mounting slots, the motor rotor and the motor having same of the present disclosure provides a method of increasing the space occupancy of the permanent magnets and improving the anti-demagnetization performance of the permanent magnets of the motor rotor. The present disclosure optimizes the shape of the permanent magnet, increases the efficiency of the motor and achieves the effects that the motor is not easy to be demagnetized under larger loads.

The preferred embodiments described above are not restricted. It will be understood by those skilled in the art that various amendments, replacements and improvements based on the thoughts and principles of the disclosure may be made therein without departing from the scope of the disclosure.

**Claims**

1.  A motor rotor, comprising an iron core (10) and a plurality of sets of permanent magnets (20) provided inside the iron core (10), wherein:

    a plurality of sets of mounting slots (30) are circumferentially distributed in the iron core (10);
    each set of mounting slots (30) comprises two or more layers of mounting slots (30) provided at intervals in radial direction of the iron core (10);
    the permanent magnets (20) of each set of permanent magnets (20) are correspondingly embedded into the mounting slots (30) of each set of mounting slots (30);

on a cross section of the permanent magnet (20), which is perpendicular to the axis of the rotor, thickness of the center part of the permanent magnet is larger than thickness of each of two ends of the permanent magnet.

2. The motor rotor according to claim 1, wherein: a formula $\frac{2}{5} \leq \frac{A}{T} \leq 1$ is satisfied, wherein T is the thickness of the permanent magnet (20) along the symmetric line, and A is the thickness of each end of the permanent magnet (20).

3. The motor rotor according to claim 1, wherein: a flux barrier bridge (13) is formed between each end of each layer of mounting slots (30) and the periphery of the rotor, and width of the flux barrier bridge (13) ranges from 0.5 mm to 1.0 mm.

4. The motor rotor according to claim 1, wherein: on a cross section of the mounting slot (30), which is perpendicular to the axis of the iron core (10), the mounting slot (30) comprises an outer arc line segment (33), whose center point is located in a symmetric line of the rotor.

5. The motor rotor according to claim 4, wherein: on a cross section of the mounting slot (30), which is perpendicular to the axis of the iron core (10), the mounting slot (30) further comprises an inner arc line segment (34), whose center point is located in the symmetric line of the rotor.

6. The motor rotor according to claim 5, wherein: on a cross section of the mounting slot (30), which is perpendicular to the axis of the iron core (10), the mounting slot (30) comprises a first outer straight line segment (32a) at one end and a second outer straight line segment (32c) at the other end, which are respectively connected to the outer arc line segment (33); an angle β is formed by the first outer straight line segments (32a) and the second outer straight line segment (32c); and a formula $\frac{3\pi}{P} > \beta > \frac{4\pi}{3P}$ is satisfied, wherein P is the number of poles of the motor rotor.

7. The motor rotor according to claim 5, wherein: on a cross section of the mounting slot (30), which is perpendicular to the axis of the iron core (10), the mounting slot (30) comprises a first outer straight line segment (32a) which is connected to one end of the outer arc line segments (33), and a first inner straight line segment (32b) which is connected to one end of the inner arc line segment (34) and disposed at the same side as the first outer straight line segment (32a); and an angle α is formed by the first outer straight line segment (32a) and the first inner straight line segment (32b), wherein the angle α is a sharp angle.

8. The motor rotor according to claim 1, wherein: on each cross section of each mounting slot (30), which is perpendicular to the axis of the iron core (10), each mounting slot (30) has arc line segments; and all arc line segments of each set of mounting slots, which are arranged in sequence in a direction from the axis of the iron core (10) to the periphery of the iron core 10, while the respective center points of the arc line segments are also distributed in sequence in the same direction.

9. The motor rotor according to any one of claims 1 to 8, wherein: there is a clearance left between each of two ends of each permanent magnet (20) and its corresponding mounting slot (30).

10. The motor rotor according to claim 9, wherein: the clearance between each of two ends of the permanent magnet (20) and its corresponding magnet slot (30) is filled with non-magnetism medium.

11. A motor, comprising the motor rotor according to any one of the claims 1 to 10.

Fig. 1

Fig. 2

Fig. 3

Fig.4

Fig.5

| INTERNATIONAL SEARCH REPORT | International application No. |
|---|---|
| | **PCT/CN2011/079064** |

**A. CLASSIFICATION OF SUBJECT MATTER**

See the extra sheet
According to International Patent Classification (IPC) or to both national classification and IPC

**B. FIELDS SEARCHED**

Minimum documentation searched (classification system followed by classification symbols)

IPC： H02K

Documentation searched other than minimum documentation to the extent that such documents are included in the fields searched

Electronic data base consulted during the international search (name of data base and, where practicable, search terms used)

CNPAT CNKI WPI EPODOC: rotor　size　thickness　depth　curvature　cross section　curve　permanent　reluctance torque

**C. DOCUMENTS CONSIDERED TO BE RELEVANT**

| Category* | Citation of document, with indication, where appropriate, of the relevant passages | Relevant to claim No. |
|---|---|---|
| Y | JP2011-83066A(UNIV OSAKA PREFECTURE) 21 Apr.2011(21.04.2011) description，paragraph 24 to paragraph 38 of the, figures 1-5 | 1-11 |
| Y | CN101777809A(HITACHI METALS LTD)14 Jul.2010(14.07.2010) description ,paragraph 74 ,figure 1(a) | 1-11 |
| E | CN202142924U(ZHUHAI GREE ELECTRIC APPLIANCES CO LTD et al.) 08 Feb.2012 (08.02.2012) claims 1－11 | 1-11 |
| A | JP 9－308198A（MATSUSHITA DENKI SANGYO KK）28 Nov.1997（28.11.1997）the whole document | 1-11 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 04 Apr.2012(04.04.2102) | 10 May 2012(10.05.2012) |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>XIAO, Jijun<br><br>Telephone No. (86-10)62411808 |

Form PCT/ISA /210 (second sheet) (July 2009)

## INTERNATIONAL SEARCH REPORT
Information on patent family members

International application No.

**PCT/CN2012/079064**

| Patent Documents referred in the Report | Publication Date | Patent Family | Publication Date |
|---|---|---|---|
| JP2011-83066A | 21.04.2011 | NONE | |
| CN101777809A | 14.07.2010 | JP2005020991A | 20.01.2005 |
| | | WO2005101614A1 | 27.10.2005 |
| | | US2006170301 A1 | 03.08.2006 |
| | | CN1757148A | 05.04.2006 |
| | | EP1734637A1 | 20.12.2006 |
| | | CN1757148B | 26.05.2010 |
| CN202142924U | 08.02.2012 | NONE | |
| JP 9—308198A | 28.11.1997 | NONE | |

Form PCT/ISA /210 (patent family annex) (July 2009)

# INTERNATIONAL SEARCH REPORT

| International application No. |
|---|
| **PCT/CN2011/079064** |

Continuation of: Box A. CLASSIFICATION OF SUBJECT MATTER , second sheet

H02K1/27(2006.01)i
H02K21/16(2006.01)i

Form PCT/ISA /210 (extra sheet) (July 2009)